**Europäisches Patentamt**

**European Patent Office**

**Office européen des brevets**

(19)

(11) Numéro de publication : **0 471 633 A1**

(12)

# DEMANDE DE BREVET EUROPEEN

(21) Numéro de dépôt : **91460040.8**

(22) Date de dépôt : **01.08.91**

(51) Int. Cl.$^5$ : **H04L 12/42**

(30) Priorité : **16.08.90 FR 9010506**

(43) Date de publication de la demande :
**19.02.92 Bulletin 92/08**

(84) Etats contractants désignés :
**DE GB**

(71) Demandeur : **FRANCE TELECOM**
**Etablissement autonome de droit Public, 6,**
**Place d'Alleray**
**F-75015 Paris (FR)**

(72) Inventeur : **Ponsard, Benoît**
**19 avenue J.B. Clément**
**F-92100 Boulogne (FR)**

(74) Mandataire : **Corlau, Vincent**
**c/o Cabinet Vidon Immeuble Germanium 80**
**avenue des Buttes de Coesmes**
**F-35700 Rennes (FR)**

(54) **Réseau de communication à anneau d'écriture et anneau de lecture et procédé d'accès et de reconfiguration d'un tel réseau.**

(57)   L'invention concerne un réseau informatique permettant des échanges de données à très haut débit, avec des temps très courts d'acheminement des messages entre une station émettrice et une station réceptrice.

Selon l'invention, ce réseau comprend deux media (21,22) de transmission parallèles et distincts rebouclés chacun en anneau, sur chacun desquels chacune des stations informatiques (23A à 23F) est insérée en coupure, un premier desdits media (21) de transmission formant un anneau d'écriture, sur lequel lesdites stations (23A à 23F) émettent leurs messages, et un second desdits media (22) formant un anneau de lecture, sur lequel lesdites stations (23A à 23F) lisent les messages qui leur sont destinés. En cas de coupure d'un desdits media et/ou de disfonctionnement d'une station, le réseau se reconfigure en un anneau replié sur lui-même.

Avantageusement, une station de rebouclage (23A) effectue la retransmission complète (27) desdits messages dudit anneau d'écriture (21) sur ledit anneau de lecture (22).

L'invention concerne également des stations (23A à 23F) insérables sur un tel réseau, des protocoles d'accès, un procédé de connexion à ce réseau et un procédé de reconfiguration en cas de panne.

EP 0 471 633 A1

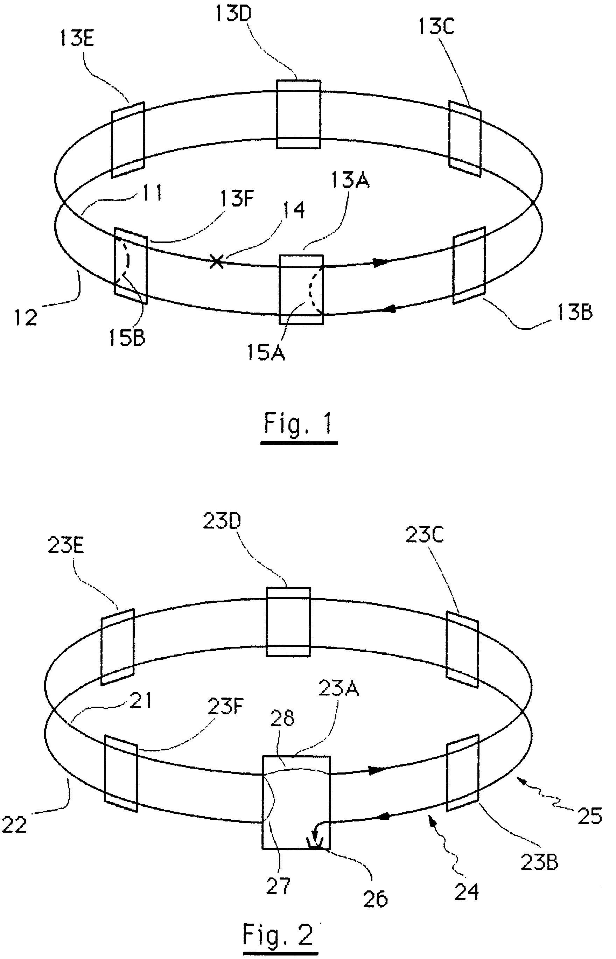

<u>Fig. 2</u>

Le domaine de l'invention est celui des réseaux informatiques, permettant l'interconnexion de stations de traitement informatique. Plus précisément, l'invention concerne un réseau informatique permettant des échanges de données à très haut débit, avec des temps très courts d'acheminement des messages entre une station émettrice et une station réceptrice.

Après une première génération adaptée notamment au trafic et au débit de la bureautique, les réseaux locaux sont en effet maintenant pressentis pour des applications beaucoup plus sophistiquées, et temporellement plus contraignantes.

C'est en particulier le cas des réseaux industriels, et a fortiori des réseaux embarqués, par exemple à bord des véhicules aérospatiaux, nécessitant notamment l'échange de messages d'alerte et de commande. Pour de telles applications, il est clair que les délais d'acheminement sont cruciaux. Ils ne doivent pas être supérieurs à quelques microsecondes, et le débit doit être de l'ordre du gigabit par seconde.

Ces temps d'acheminement très courts imposent des contraintes nombreuses, tant au niveau de la topologie du réseau que du protocole d'accès à ce réseau et des stations, au moins en ce qui concerne leurs couches basses. L'invention concerne donc un réseau informatique, mais également des stations insérables dans ce réseau, et des protocoles d'accès à ce réseau.

Par ailleurs, les réseaux industriels et embarqués doivent être robustes. En effet, la transmission d'un message d'alerte dans un avion, par exemple, ne doit bien évidemment être interrompue en aucun cas, même lorsque se produit une panne, telle que la coupure d'une liaison entre deux stations ou l'arrêt d'une station. Ces réseaux doivent donc être reconfigurables en cas de panne. L'invention concerne ainsi également un procédé de connexion et un procédé de reconfiguration du réseau informatique.

On connaît déjà le réseau FDDI (Fiber Distributed Data Interface (Interface pour informations distribuées sur fibre optique)), qui est un réseau à jeton ayant un débit égal à 100 Mbit/s. Ce réseau est notamment présenté dans l'article "FDDI- a Tutorial" ("FDDI-Instructions"), de Floyd E. Ross (IEEE Communication Magazine - May 1986 - Vol.24, N°5). Il s'appuie sur deux anneaux contrarotatifs, c'est-à-dire ayant des sens de circulation des informations opposés, pouvant être reconfigurés en un seul anneau rebouclé en cas de panne, ainsi que cela est illustré en figure 1.

Plus précisément, la figure 1 présente ce type de réseau connu, à deux anneaux contrarotatifs 11 et 12. En fonctionnement normal, les deux anneaux 11 et 12 sont totalement indépendants. Chacune des stations 13A à 13F recopie en sortie les données qu'elle reçoit en entrée sur chacun des anneaux.

Lorsqu'une coupure 14 d'un des anneaux (11) est détectée par les stations 13A et 13F qui l'entourent, celles-ci cessent d'émettre (station 13F) et de lire (station 13A) les données sur l'anneau 11, et rebouclent (15A et 15B) l'anneau 11 sur l'anneau 12. De cette façon le réseau ne comprend plus qu'un seul anneau replié sur lui-même, de longueur pratiquement double de celle de chaque anneau 11 et 12. Malgré la coupure 14, les stations 13A à 13F restent ainsi toutes interconnectées.

La reconfiguration d'un tel réseau à anneaux contrarotatifs est notamment décrite dans l'article "Automatic Configuration For Fiber-Based LAN" ("Configuration Automatique pour Réseaux Locaux à Fibres Optiques") (E.A Zurfluh et al, EFOC/LAN 88 ; 29-06/01-07-88).

De tels réseaux présentent donc une caractéristique intéressante de robustesse, puisqu'ils sont capables de pallier la défaillance d'une liaison ou d'une station. Toutefois, ils présentent deux types d'inconvénients, selon leur configuration de base, le second anneau pouvant être :

– soit un simple anneau de réserve, uniquement utilisé en cas de panne, - soit un anneau identique au premier, les communications entre deux stations ayant lieu indistinctement sur l'un ou l'autre des anneaux, par exemple en fonction de leur disponibilité.

Dans le premier cas, on rencontre l'inconvénient qu'il y a clairement sous-emploi des ressources disponibles, un des anneaux étant inutilisé en fonctionnement normal.

Dans le second cas, les deux anneaux ont l'inconvénient de se trouver en position de concurrence. Chaque station doit donc gérer en permanence deux dialogues indépendants, et éviter les situations de conflit, par exemple lorsque deux ordres contradictoires sont reçus simultanément. Cela se traduit par une complexité accrue des stations, entraînant un temps élevé de traversée de chaque station, au détriment du délai global de transmission.

En effet, il faut bien noter que ce délai de transmission d'un message n'est pas uniquement dépendant du débit du medium de transmission, mais également du protocole d'accès au réseau et surtout de la capacité de chacune des stations à recopier rapidement sur ses sorties les données reçues sur ses entrées. Ainsi, à titre d'exemple, aux 1,5 $\mu$s de propagation pure le long de 300 m de fibre optique à 1 Gbit/s, il n'est pas rare qu'il faille ajouter un temps de traversée de 1 $\mu$s par station.

L'invention a notamment pour objectif de pallier ces différents inconvénients.

Plus précisément, un objectif de l'invention est de fournir un réseau informatique à très haut débit, et à délai réduit de transmission de données entre deux stations. Cet objectif général de réduction des délais d'acheminement des messages correspond notamment aux exigences des nouveaux réseaux industriels et embarqués.

Un autre objectif de l'invention est de fournir un tel réseau présentant une topologie équitable, c'est-à-dire donnant à chacune des stations des droits d'accès équivalents au réseau. En effet, dans certains réseaux, et notamment les réseaux utilisant des media de transmission non rebouclés sur eux-mêmes, certaines stations, par exemple les stations proches des extrémités, sont privilégiées. Dans le réseau selon l'invention, en revanche, toutes les stations sont équivalentes en terme de droit d'accès.

L'invention a également pour objectif de fournir un tel réseau, qui soit robuste face aux différents types de pannes. Le réseau selon l'invention présente donc une structure reconfigurable, permettant de pallier la déficience d'une station ou d'une liaison. Un objectif complémentaire de l'invention est donc également de fournir un procédé de reconfiguration du réseau en cas de panne.

Un autre objectif de l'invention est de fournir un tel réseau, dont l'agencement permette un mécanisme simple de retrait des messages reçus. En effet, il ne faut pas qu'un message émis fasse plusieurs tours sur le réseau. Il est donc nécessaire d'éliminer ce message après qu'il a été lu par la station destinatrice. En règle générale, cette élimination est assurée par la station destinatrice, ou par la station émettrice, après que le message a fait un tour complet sur le réseau. Dans tous les cas où le réseau repose sur un medium rebouclé, l'élimination des messages nécessite une analyse particulière dans chaque station, entraînant un temps plus long de traversée de chaque station. En revanche, dans le cas des réseaux à topologie ouverte, c'est-à-dire non rebouclée, l'élimination des messages se fait de façon automatique, à chaque extrémité du réseau.

Un objectif particulier de l'invention est donc de réunir dans un tel réseau les avantages d'équité entre les stations des réseaux à topologie fermée, ou rebouclée, et d'élimination simplifiée des messages des réseaux à topologie ouverte.

L'invention a également pour objectif de fournir un tel réseau, sur lequel il est possible de diffuser des messages. En d'autres termes, un tel réseau permet l'émission d'un seul message en direction de plusieurs, voire de toutes les stations présentes sur le réseau.

Un autre objectif de l'invention est de fournir un tel réseau, sur lequel la plupart des protocoles d'accès connus peuvent être mis en oeuvre, et notamment les protocoles d'accès à jeton de réservation de priorité, à jeton temporisé et à compartiments.

Un objectif complémentaire de l'invention est donc de fournir plusieurs protocoles d'accès adaptés à un tel réseau. Un objectif particulier de l'invention est de fournir un tel protocole d'accès à compartiments, pour lequel la gestion des compartiments est simplifiée, en liaison avec les caractéristiques du réseau de l'invention.

Un autre objectif de l'invention est de fournir une adaptation de protocoles d'accès à compartiments de type connu, simplifiant les mécanismes de libération de ces compartiments.

L'invention a également pour objectif de fournir des stations de traitement informatique adaptées à un tel réseau.

Notamment, un objectif de l'invention est de fournir de telles stations, pour lesquelles le temps de traversée est très réduit. En particulier, l'invention a pour objectif de fournir de telles stations, dont les couches basses sont simplifiées.

Ces objectifs, ainsi que d'autres qui apparaîtront par la suite, sont atteints selon l'invention par un réseau informatique, permettant l'interconnexion d'au moins deux stations informatiques, notamment pour l'établissement de communications à très haut débit entre lesdites stations,

comprenant deux media de transmission parallèles et distincts rebouclés chacun en anneau, sur chacun desquels chacune desdites stations est insérée en coupure, un premier desdits media de transmission formant un anneau d'écriture, sur lequel lesdites stations émettent leurs messages, et un second desdits media formant un anneau de lecture, sur lequel lesdites stations lisent les messages qui leur sont destinés,

lesdits anneaux de lecture et d'écriture ayant des sens de circulation des informations contrarotatifs,

ledit réseau comprenant également des moyens de reconfiguration en un réseau à un seul anneau replié sur lui-même, lorsqu'une coupure d'au moins un desdits media et/ou un disfonctionnement d'une desdites stations est détecté.

Ce réseau est donc dérivé des réseaux à topologie classique à deux anneaux contra-rotatifs, dont il reprend la robustesse (possibilité de reconfiguration en cas de panne) et l'équité (pas de station favorisée par essence).

Le fait de distinguer les parties écriture et lecture permet de simplifier les couches basses des stations. Notamment, il n'y a aucune action des stations sur les données circulant sur l'anneau de lecture. Les stations assurent donc systématiquement la recopie des données, sans analyse préalable, ce qui permet d'augmenter la vitesse de transfert des messages.

Avantageusement, ledit premier medium formant anneau d'écriture est également porteur des informations correspondant au droit d'accès audit réseau.

Ainsi, dans cette topologie, les connexions sont particularisées, contrairement au réseau FDDI où elles sont équivalentes :

- sur l'anneau d'écriture les stations capturent le droit d'accès, émettent leurs messages puis libèrent le droit d'accès ;
- sur l'anneau de lecture les stations ne sont capables que de lire les données à recevoir.

Avantageusement, le réseau comprend une station de rebouclage, effectuant la retransmission complète desdits messages dudit anneau d'écriture sur ledit anneau de lecture, et au moins une station de répétition, assurant la continuité desdits anneaux, par recopie systématique en sortie de station des informations reçues en entrée de station sur chacun desdits anneaux.

De cette façon, les données émises par une station quelconque sur le réseau de lecture sont recopiées par la station de rebouclage sur le réseau de lecture, sur lequel elles sont lues par la station destinatrice.

Préférentiellement, ladite station de rebouclage assure la continuité dudit droit d'accès sur ledit anneau d'écriture, en recopiant en sortie de station les informations correspondant audit droit d'accès reçues en entrée de station.

En d'autres termes, toutes les stations sont insérées en coupure sur les deux anneaux et en assurent la continuité. Une seule station, celle qui a procédé au rebouclage du réseau, a un fonctionnement particulier :
- sur l'anneau d'écriture, elle assure uniquement la continuité du droit d'accès en recopiant les champs de contrôle correspondants du protocole d'accès;
- sur l'anneau de lecture, elle assure la retransmission complète du flux binaire arrivant par l'anneau d'écriture.

De façon avantageuse, ladite station de rebouclage assure l'élimination systématique des informations qu'elle reçoit sur l'anneau de lecture.

Les informations reçues en bout de l'anneau de lecture sont ignorées par cette station de rebouclage (extraction naturelle des messages hors du medium). Ainsi, l'élimination des messages est assurée automatiquement, après un tour complet sur l'anneau de lecture. Il n'y a pas besoin, au niveau de chaque station, de gérer cette élimination.

Une station informatique insérable dans un tel réseau comprend préférentiellement :
- un couple émetteur-récepteur pour ledit anneau d'écriture ;
- un couple émetteur-récepteur pour ledit anneau de lecture ;
- une entité de vie végétative, assurant la permanence du protocole d'accès audit réseau ;
- une entité de gestion des connexions ;
- une entité de gestion de l'émission et de la réception des messages de données.

Avantageusement, lesdits couples émetteur-récepteur comprennent des moyens de récupération de rythme et un registre tampon élastique de plésiochronisme.

En effet, pour éviter toute perte de données dans chaque station, on y insère un registre tampon élastique, de façon à compenser les légères différences de fréquences pouvant apparaître entre les horloges locales des stations.

Dans un mode de réalisation préférentiel de l'invention, une telle station peut prendre au moins certains des six états stables suivants :
- station contournée, complètement isolée dudit réseau, dont la continuité reste assurée ;
- station insérée, les émetteurs et récepteurs de ladite station étant connectés audit réseau, mais ne recevant aucune information cohérente ;
- station de tête, recevant des informations cohérentes uniquement sur ledit anneau de lecture ;
- station de queue, recevant des informations cohérentes uniquement sur ledit anneau d'écriture, et recopiant lesdites informations cohérentes sur ledit anneau de lecture ;
- station de répétition, recevant des informations cohérentes sur les deux anneaux, et assurant la transition systématique desdites informations ;
- station de rebouclage, recopiant les informations de droit d'accès sur ledit anneau d'écriture, et les informations de données sur ledit anneau de lecture.

Il est clair que ces six états ne tiennent compte que de la couche physique. Par ailleurs, on notera qu'en plus de ces six états stables, certains états intermédiaires fugitifs non détaillés ici peuvent apparaître au cours de l'évolution des connexions du réseau.

Un procédé avantageux de connexion d'une telle station à un réseau informatique selon l'invention comprend les étapes suivantes :
- réalisation de tests internes à ladite station, dans ledit état de station contournée ;
- passage dudit état de station contournée audit état de station insérée, et émission d'un message de test sur ledit anneau d'écriture ;
- si ladite station est dans l'état de station insérée et reçoit un message de test sur ledit anneau d'écriture, passage à l'état de station de queue ;
- si ladite station est dans l'état de station insérée et reçoit un message de test sur ledit anneau de lecture, passage à l'état de station de tête ;
- si ladite station est dans l'état de station de queue et reçoit un message de test sur ledit anneau de lecture, passage à l'état de station de répétition ;
- si ladite station est dans l'état de station de tête et reçoit un message de test sur ledit anneau d'écriture, passage à l'état de station de répétition ;
- si ladite station est dans l'état de station de queue et reçoit sur ledit anneau d'écriture un message de test qu'elle a émis, passage à l'état de station de rebouclage.

En d'autres termes, chaque station, après s'être insérée au réseau, tente d'entrer en contact avec la station qui la suit et avec la station qui la précède sur le réseau. Il se constitue ainsi des sous-réseaux en anneau replié, comprenant une station de tête et une station de queue. Au fur et à mesure de la mise en fonction des stations, le ou les sous-réseaux s'agrandissent et se regroupent. Lorsque l'ensemble des stations est inséré au réseau, la station de queue devient station de rebouclage, le réseau fonctionnant alors de la façon décrite précédemment.

L'invention concerne également un procédé de reconfiguration du réseau en cas de panne.

De façon avantageuse, lorsqu'une coupure d'un desdits anneaux de lecture ou d'écriture est détectée, ledit réseau est transformé en un réseau à un seul anneau replié sur lui-même, comprenant une station de tête et une station de queue, les autres stations étant des stations de répétition.

En cas de panne, le réseau prend donc une configuration dite en anneau replié. Ainsi, malgré la panne, chaque station reste accessible à l'ensemble des autres stations. Chacun des deux anneaux de lecture et d'écriture perd alors momentanément sa spécificité, le réseau ne comportant plus qu'un seul medium, porteur de l'ensemble des données.

Préférentiellement, lorsque l'une desdites stations détecte une coupure dudit anneau d'écriture, par l'arrêt de l'activité sur son récepteur pour l'anneau d'écriture, ladite station effectue les opérations suivantes :
- passage dans l'état de station de tête ;
- arrêt de la transmission de données sur ledit anneau de lecture, entraînant le passage dans l'état de station de queue de la station en amont de ladite station sur l'anneau d'écriture ;
- émission de messages entraînant le passage de l'ensemble des autres stations dans l'état de station de répétition.

De même, lorsque l'une desdites stations détecte une coupure dudit anneau de lecture, par l'arrêt de l'activité sur son récepteur pour l'anneau de lecture, ladite station effectue les opérations suivantes :
- passage dans l'état de station de queue ;
- émission d'un message vers la station en aval de ladite station sur l'anneau d'écriture;
ladite station en aval effectuant, à réception dudit message, les opérations suivantes:
- passage dans l'état de station de tête ;
- émission de messages entraînant le passage de l'ensemble des autres stations dans l'état de station de répétition.

Il est à noter que ce procédé de reconfiguration permet de pallier une coupure d'un desdits anneaux, mais également des deux anneaux simultanément, ainsi que la défaillance d'une station particulière.

Dès que la panne est réparée, le réseau reprend avantageusement la configuration en double anneau. Ainsi, lorsque ledit réseau est configuré en réseau à un seul anneau replié sur lui-même et que la station de queue dudit réseau reçoit un message de test sur son récepteur pour l'anneau de lecture, ladite station passe d'abord dans l'état de station de répétition, puis dans l'état de station de rebouclage lorsqu'elle reçoit sur ledit anneau d'écriture un message qu'elle a émis.

Le réseau de l'invention peut être utilisé avec la plupart des protocoles d'accès connus.

Il est notamment possible d'utiliser un protocole à jeton à réservation de priorité. Dans ce cas, ledit jeton et les en-têtes de chaque message reçus par chacune desdites stations sont systématiquement recopiés sur ledit anneau d'écriture.

On peut également mettre en oeuvre un protocole d'accès à jeton temporisé, la négociation du temps de rotation dudit jeton comprenant les étapes suivantes :
- émission par l'une desdites stations vers ladite station de rebouclage d'un premier message demandant la négociation du temps de rotation dudit jeton ;
- à réception dudit premier message par ladite station de rebouclage, émission par ladite station de rebouclage d'un second message vers l'ensemble des autres stations ;
- à réception dudit second message, émission par chacune desdites autres stations d'un message précisant leur besoin pour ledit temps de rotation ;
- détermination par chacune desdites stations de la station ayant la plus forte exigence pour ledit temps de rotation, par scrutation de l'ensemble des messages circulant sur ledit anneau de lecture ;
- à réception par ladite station de rebouclage dudit second message émis par elle-même, détermination par ladite station de rebouclage de la station ayant la plus forte exigence pour ledit temps de rotation, puis libération d'un nouveau jeton pour remettre en route ledit réseau.

Un autre protocole d'accès intéressant est le protocole à compartiments, chacun desdits compartiments comprenant un drapeau de contrôle précisant au moins son état libre ou plein, chacune desdites stations pouvant émettre un message dans l'un desdits compartiments lorsque ledit drapeau indique l'état libre, ladite station commutant alors ledit drapeau dans l'état plein, puis commutant à nouveau ledit drapeau dans l'état libre à réception de l'en-tête dudit compartiment sur ledit anneau d'écriture, ledit en-tête ayant effectué un tour complet sur ledit anneau d'écriture.

Avantageusement, dans ce dernier cas, lesdits compartiments circulant sur ledit anneau d'écriture peuvent prendre les trois états suivants :
- état libre, disponible pour transmettre les données ;
- état plein, porteur de données ;
- état bloqué, non porteur de données mais non disponible ;
l'utilisation de l'un desdits compartiments comprenant alors les étapes suivantes :

– écriture de données à transmettre par une station émettrice dans ledit compartiment reçu dans l'état libre, et commutation de l'état dudit compartiment dans l'état plein ;

– recopie par ladite station de rebouclage dudit compartiment dans l'état plein dudit anneau d'écriture sur ledit anneau de lecture, et émission d'un compartiment bloqué sur ledit anneau d'écriture ;

– commutation de l'état d'un compartiment reçu dans l'état bloqué dans l'état libre par ladite station émettrice.

Il s'agit ici d'une adaptation inventive au réseau de l'invention du protocole d'accès connu sous le nom de CFRV, décrit par M. ZAFIROVIC-VUKOTIC, I.G.M. NIEMEGEERS, dans "Performance modelling of a HSLAN slotted ring protocole" ("Modélisation des performances d'un réseau local à haut débit à protocole en anneau à compartiments") (ACM 0-89791-254-3/88/0005/0037, 1988, p. 37-46).

Dans ce mode de réalisation, la station de rebouclage joue donc le rôle de générateur de compartiments, et efface automatiquement les compartiments pleins en fin de bus de lecture. La gestion des compartiments sur trois états permet d'assurer l'équité d'accès au réseau et limite les temps de décision.

L'invention concerne également une adaptation de ces protocoles d'accès à gestion des compartiments sur trois états, permettant la simplification de l'en-tête de ces compartiments, et donc une réduction de la charge globale du réseau et du temps de traversée de chaque station.

Pour cela, chacune des stations ayant accès au réseau gère un compteur de libération de compartiments, ledit compteur étant incrémenté à chaque émission par ladite station d'un compartiment dans l'état plein, et ledit compteur étant décrémenté à chaque réception d'un compartiment dans l'état bloqué, tant que ledit compteur a une valeur strictement positive, ledit compartiment reçu dans l'état bloqué étant alors réémis dans l'état libre.

Il n'y a pas de notion d'appartenance d'un compartiment bloqué à une station d'émission. En effet, la libération d'un compartiment est effectuée par la première station rencontrée possédant un compteur non nul de compartiments à libérer. Il s'agit donc d'une libération banalisée : à chaque compartiment libéré par une station correspond un compartiment plein émis auparavant par la même station, mais sans qu'il y ait une exacte correspondance entre le compartiment plein émis et le compartiment ainsi libéré. Ce mécanisme permet notamment de simplifier l'en-tête des compartiments : les compartiments bloqués ne sont porteurs d'aucune adresse de destination.

D'autres caractéristiques et avantages de l'invention apparaîtront à la lecture suivante d'un mode de réalisation préférentiel de l'invention, donnée à titre illustratif et non limitatif, et des dessins annexés, dans lesquels :

– la figure 1 présente un réseau à deux anneaux contrarotatifs de type connu, et a déjà été décrite en préambule ;

– la figure 2 représente un réseau informatique selon l'invention, à anneau d'écriture et anneau de lecture ;

– la figure 3 est un schéma de principe d'une station informatique insérable dans le réseau de la figure 2 ;

– les figures 4A à 4F illustrent les six états stables que peut prendre une station telle que représentée en figure 3 ;

– la figure 5 présente les différents éléments topologiques apparaissant dans un réseau selon la figure 2 ;

– les figures 6A à 6E illustrent le procédé de connexion d'une station au réseau de la figure 2, dans le cas d'école de deux stations isolées ;

– les figures 7A et 7B illustrent le processus de reconfiguration du réseau de la figure 2, en cas de coupure d'une liaison ;

– les figure 8A et 8B présentent le format de deux compartiments, dans deux cas distincts de protocoles d'accès à compartiments.

Le réseau informatique de l'invention permet l'échange de données entre des stations à très haut débit et à délai d'acheminement très court. Ainsi, à titre d'exemple, il peut être utilisé à bord de véhicules aérospatiaux, notamment pour transmettre des messages d'alerte de quelques centaines de bits, avec un délai total d'acheminement inférieur à quelques μs.

Pour transmettre ce flux d'information, on utilise avantageusement un réseau à 1 Gbps.

Dans la suite, on montre comment un délai d'acheminement très court impose notamment des contraintes sur les couches basses des stations, ainsi que sur la topologie et le protocole d'accès à retenir.

La figure 2 présente un réseau informatique selon l'invention. La topologie de ce réseau, que l'on appelera par la suite topologie à anneaux ouverts, est dérivée de la topologie classique à deux anneaux contra-rotatifs, dont elle reprend la robustesse, en permettant la reconfiguration en cas de panne, et l'équité, aucune station n'étant favorisée par essence. Elle est cependant mieux adaptée aux hauts débits car elle apporte une simplification des stations, en particulier pour le retrait des messages après réception. Comme on le verra par la suite, la terminologie de "topologie à anneaux ouverts" s'appuie notamment sur le fait que le réseau de l'invention s'appuie effectivement sur deux media en anneaux, mais non rebouclés sur eux-mêmes ainsi que cela est le cas dans les réseaux connus, tels que décrits en préambule.

Cette nouvelle topologie de réseau comprend deux anneaux 21 et 22 parallèles et distincts, auxquels chacune des stations informatiques 23A à 23F est connectée.

Contrairement aux topologies à anneaux contra-rotatifs connus, les deux anneaux 21 et 22 ont un rôle particulier. Plus précisément, le réseau à anneaux ouverts comprend d'une part un anneau 21 d'écriture, sur lequel les stations 23A à 23F capturent le droit d'accès au réseau, émettent des messages puis libèrent le droit d'accès, et d'autre part un anneau 22 de lecture sur lequel les stations 23A à 23F ne sont capables que de lire les données à recevoir.

Les stations 23A à 23F sont donc passives vis à vis de l'anneau 22 de lecture, sur lequel elles ne peuvent pas agir. Cela permet de réduire de façon importante le temps de traversée des stations sur cet anneau.

De façon à faire passer les données émises sur l'anneau 21 d'écriture vers l'anneau 22 de lecture, une station unique 23A, dite station de rebouclage, effectue le rebouclage du réseau. Cette station assure la retransmission complète (27) sur l'anneau 22 de lecture du flux binaire arrivant par l'anneau 21 d'écriture. Par ailleurs, sur l'anneau d'écriture, elle assure la continuité du droit d'accès (28) en recopiant les champs de contrôle correspondants du protocole.

Chacune des autres stations 23B à 23F est insérée en coupure sur les deux anneaux, dont elle assure la continuité, par recopie systématique de toutes les données.

Les stations connectées à une topologie à anneaux ouverts peuvent être vues comme naturellement orientées par le bus d'écriture 21. Chaque station 23B présente ainsi un amont 24 et un aval 25 définis par le sens de circulation des informations sur le bus d'écriture 21.

Dans les réseaux locaux classiques, les informations de protocole (jeton, champ de réservation, bit libre/occupé, ...) circulent à la même vitesse et sur le même itinéraire que les données à transmettre. Ce n'est pas le cas de la topologie à anneaux ouverts, car la station de rebouclage 23A traite différemment ces deux types d'information.

Le flux binaire arrivant par son amont 24 sur l'anneau d'écriture 21 est recopié intégralement sur l'anneau 22 de lecture en amont, ce qui permet aux stations d'y lire les données qui leur sont destinées, en ignorant les champs de protocole.

Par ailleurs, les champs de protocole sont recopiés directement sur l'anneau 21 d'écriture par la station 23A de rebouclage. Ils circulent ainsi sur un anneau réel, refermé par cette dernière station, alors que les données circulent sur une "épingle à cheveux" repliée sur elle-même.

Cette topologie assure donc l'équité de l'accès, les informations de protocole circulant sur un anneau, en même temps que l'élimination naturelle des messages en bout 26 de l'anneau de lecture 22, les données circulant sur un medium ouvert.

En effet, dans les réseaux à topologie fermée connus, c'est-à-dire rebouclés sur eux-mêmes, chaque donnée émise doit être impérativement retirée par une station sous peine d'engorgement du réseau ou de réceptions multiples. Cela impose donc un mécanisme particulier, dans chaque station, entraînant une augmentation du temps de traversée de ces stations. Dans le réseau de l'invention, en revanche, l'élimination des données est réalisée systématiquement par la station de rebouclage 23A, à l'extrémité 26 de l'anneau 22 de lecture, après que ces données aient fait un tour complet sur cet anneau.

Outre les qualités de simplicité d'élimination des messages, d'équité d'accès et de robustesse, ainsi que cela sera expliqué plus tard, la topologie à anneaux ouverts présente de nombreux autres avantages.

Notamment, elle ne nécessite pas d'adaptation de longueur dans le cas d'un anneau compartimenté. On est en effet toujours amené, dans ce cas, à introduire des éléments de retard supplémentaires dans la boucle, dont le rôle est de permettre à un nombre entier de compartiments de tenir sur l'anneau. La longueur de ce retard supplémentaire est au plus celle d'un compartiment. Comme chaque station doit être capable d'assurer cette fonction, il faut leur rajouter une mémoire rapide de quelques centaines de bits. Au lieu d'imposer cet élément coûteux à chaque station, la topologie à anneaux ouverts ne demande qu'un registre tampon de faible profondeur pour refermer l'anneau. Ce registre ne transfère en effet, entre les deux extrémités de l'anneau d'écriture, que le champ de contrôle du droit d'accès et peut donc être de longueur réduite.

Par ailleurs, et contrairement à ce qui se passe dans le cas des réseaux de type connu à anneaux contra-rotatifs, dans lesquels les deux anneaux peuvent transmettre simultanément des données pour une même station, il n'y a qu'un seul flux de données à traiter. Le fonctionnement des stations est donc simplifié, notamment du fait qu'il ne risque pas de se présenter des situations de conflit, et les circuits logiques de chaque station peuvent être optimisés pour chaque accès (écriture ou lecture).

Lorsque l'on veut transmettre des messages urgents sur un réseau local, il est important de limiter le temps de traversée des stations. Dans la topologie de l'invention à anneaux ouverts, les fonctions de la couche MAC (Medium Access Control : Contrôle d'Accès au Medium) diffèrent sur les deux anneaux : gestion du droit d'accès et émission des messages sur l'anneau d'écriture, réception des messages sur l'anneau de lecture. Cette séparation des fonctions est un atout important pour la réalisation de couches MAC rapides.

Par couche MAC, on entend notamment le module chargé dans chaque station de la gestion des communications. Pour plus de précision sur le rôle de la couche MAC, on se reportera avantageusement au chapitre 5 de l'ouvrage de W. STALLINGS, "Local area networks : an introduction" ("une introduction aux réseaux locaux") (Macmillan Publishing Company, 1984, ISBN 0-02-415460-1).

Enfin, la topologie à anneaux ouverts conserve la caractéristique de diffusion (en anglo-saxon broadcasting) typique des réseaux locaux. Une fois émis, les messages sont intégralement recopiés sur l'anneau 12 de lecture par la station 13A de rebouclage et passent ensuite à travers toutes les stations 13B à 13F. Un seul message émis peut ainsi diffuser son information à toutes les stations ou à un ensemble seulement (adresses de groupe), sans que la station source soit obligée d'en émettre plusieurs.

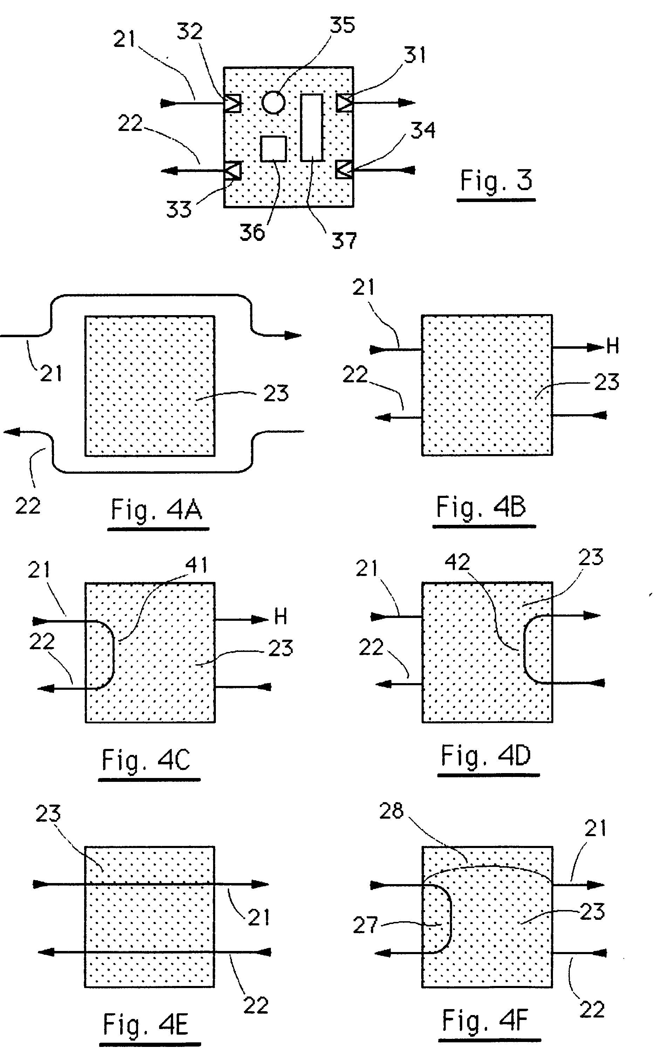

Sans entrer dans les détails précis de réalisation, il est possible de décrire schématiquement la structure des couches basses d'une station connectée à un réseau à anneaux ouverts. Cinq entités peuvent être dégagées, ainsi que cela est illustré en figure 3. On peut ainsi distinguer :
   – les deux couples émetteur (31,33)-récepteur (32,34), qui assurent les fonctions de base d'une transmission point à point (mise à niveau, extraction de l'horloge, buffer élastique de plésiochronisme, décodage-désérialisation, puis codage-sérialisation, émission) ;
   – l'entité de vie végétative 35, assurant la permanence du protocole d'accès. Toutes les stations en possèdent une, mais une seule à la fois est active sur le réseau, la station de rebouclage. A titre d'exemple, s'il s'agit d'un protocole à compartiments, l'entité de vie végétative fabrique la succession des compartiments vides, pleins, réservés, etc ... en fonction des compartiments qu'elle reçoit sur l'anneau d'écriture amont. S'il s'agit d'un protocole à jeton, elle assure la création du jeton et sa surveillance ;
   – l'entité de gestion des connexions 36, qui est activée lors de la mise sous tension d'une station ou lors d'une panne sur le réseau. C'est elle qui va dérouler les processus de reconfiguration du réseau ;
   – l'entité MAC 37, gérant l'émission et la réception des messages de données en fonction des disponibilités d'accès offertes par le protocole.

Il est à noter que le fait de disposer de deux anneaux ayant des rôles distincts permet de spécialiser les couples émetteur-récepteur (31,32) et (33,34). Il en résulte une simplicité accrue, et donc un temps de traversée de chaque station réduit.

La transmission d'informations numériques s'accompagne toujours de notions de synchronisation : la station émettrice doit avoir une référence de temps (l'horloge) pour émettre ses données ; la ou les stations réceptrices doivent pouvoir connaître les instants d'arrivée des informations pour les stocker correctement dans leurs mémoires.

Pour assurer le bon fonctionnement du réseau, chaque station doit donc disposer d'une horloge de réception et d'une horloge d'émission. Dans le mode de réalisation décrit, on utilise pour la synchronisation globale du réseau au niveau bit un registre élastique de plésiochronisme dans chaque couple émetteur-récepteur (31,32) et (33,34).

Ainsi, chaque station possède une horloge locale d'émission. Pour éviter toute perte de données, on insère un registre élastique qui se remplit ou se vide, de façon à compenser les légères différences de fréquence entre l'horloge de réception et l'horloge locale de ré-émission.

Cette solution présente notamment l'avantage de ne pas nécessiter une régénération de l'horloge de proche en proche dans toutes les stations, ce qui s'avère difficile à haut débit.

Après avoir décrit les éléments constitutifs d'une station selon l'invention, on liste ci-dessous les états de connexion ou de reconfiguration que peut prendre une telle station.

Lorsque l'on parle des états de connexion d'une station vis à vis du réseau, il faut faire la différence entre l'état du medium dans cette station et l'état de la connexion entre la couche physique et la couche MAC au sein de la station. On ne s'intéresse ici qu'aux mécanismes qui permettent à une station de s'assurer de la continuité du medium sur lequel elle tente une connexion. Une fois cette assurance prise, la station insérera sa couche MAC dans le réseau ainsi formé et pourra participer à l'échange de données.

On suppose que les stations ont la possibilité d'émettre un flux binaire cohérent dont le codage est distinct de celui employé pour l'activité normale du réseau. Cela correspond aux symboles HALT du code 4B/5B des réseaux du type FDDI (Fiber Distributed Data Interface) dont on reprend le nom dans la description suivante.

On suppose également que les stations sont capables d'émettre des messages de gestion de réseau, différents des messages habituels et dont le rôle est de localiser la station de tête. C'est la notion de BEACON FRAME (messages de localisation) dans les réseaux du type FDDI, dont on conservera le nom.

En ne tenant compte que de la couche physique, une station peut se trouver dans six états stables, représentés respectivement sur les figures 4A à 4F:
   – station contournée (fig.4A) : la station 23 est hors tension ou en cours d'autotests internes. Un dérivateur optique l'isole totalement du réseau et assure la continuité optique du medium (21,22).
   – station insérée (fig.4B) : le dérivateur optique dirige les deux anneaux 21,22 vers les émetteurs/récepteurs de la station 23, mais celle-ci ne reçoit aucun flux binaire cohérent sur ses deux récepteurs. Pour signaler sa présence à une éventuelle station avale, elle émet des symboles HALT (H) de reconnaissance sur l'anneau 21 d'écriture. Dans cet état et les quatre suivants, la station 23 se trouve réellement insérée en coupure sur le réseau.

– station de queue (fig.4C) : la station 23 ne reçoit un flux binaire cohérent que sur l'anneau 21 d'écriture ; elle le recopie (41) sur l'anneau 22 de lecture. Sur l'anneau 21 d'écriture elle envoie continuellement des symboles HALT (H) pour signaler sa présence à une éventuelle station avale.

– station de tète (fig.4D) : la station 23 reçoit un flux binaire cohérent sur l'anneau 22 de lecture et agit en conséquence (42) sur l'anneau 21 d'écriture. Sur l'anneau 22 de lecture elle est prête à recopier tout flux cohérent venant de l'anneau 21 d'écriture.

– station de répétition (fig.4E) : la station 23 reçoit des activités cohérentes sur les deux anneaux 21,22 et les fait transiter normalement.

– station de rebouclage (fig.4F) : la station 23 recopie le droit d'accès (28) sur l'anneau 21 d'écriture et les données (27) sur l'anneau 22 de lecture.

En plus de ces six états stables, certains états intermédiaires fugitifs apparaissent au cours de l'évolution des connexions du réseau. Sans les détailler, on les verra apparaître lors de la description des différentes situations rencontrées au cours de la mise en route d'une topologie à anneaux ouverts. Ensuite, on précisera les mécanismes de reconfiguration en cas de panne.

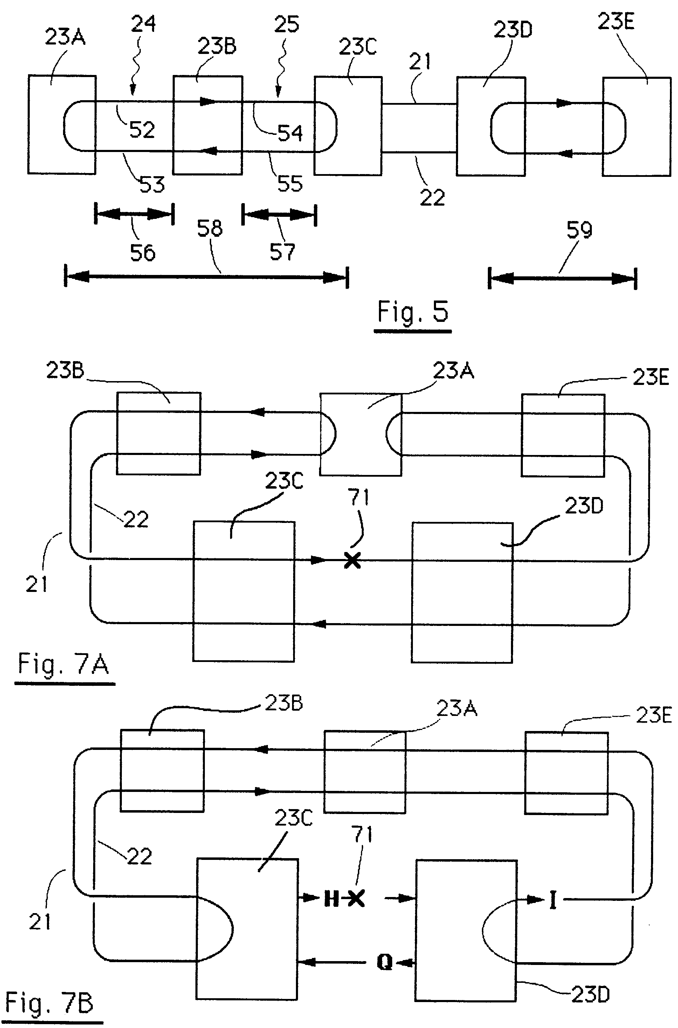

Avant de présenter ces différents mécanismes, on définit la terminologie utilisée pour les décrire, en liaison avec la figure 5.

On rappelle que chaque station 23B présente un aval 25 et un amont 24, définis par le sens de circulation des informations sur le bus d'écriture 21. Pour chaque côté d'une station une couche physique contrôle l'activité du bus d'écriture 21 et du bus de lecture 22. Lors de la mise en route d'une station, ses deux couches physiques évoluent en fonction de l'activité qu'elles détectent de leur côté. Le dernier stade de cette évolution conduit à faire coopérer l'amont et l'aval d'une station pour construire un élément du réseau final.

Par liaison, on entendra la fibre optique qui relie sur le bus de lecture 22 ou d'écriture 21, deux stations 23A et 23B adjacentes. Ainsi chaque station 23B est susceptible d'avoir deux liaisons 52,53 en amont et deux liaisons 54,55 en aval.

Un segment 56 définit l'ensemble formé par les deux liaisons 54,55, l'une sortante et l'autre entrante, du même côté d'une station 23B. On parlera donc du segment amont 56 et du segment aval 57 d'une station 23B.

Contrairement au segment quine représente qu'une portion isolée de medium reliant deux stations adjacentes, le domaine 58 est une suite linéaire continue de segments 56,57 partageant tous la même vie végétative. La station de tête 23A, en amont du domaine 58, gère le droit d'accès. En aval, la station de queue 23C recopie intégralement l'activité du bus d'écriture 21 sur le bus de lecture 22.

Le plus petit domaine 59 possible est constitué d'un segment et de ses deux stations d'extrémité.

A la mise sous tension chaque station est dans l'état contournée. Elle y effectue des auto-tests internes puis se connecte sur le réseau en commutant son dérivateur optique. Elle se trouve alors dans l'état insérée où elle attend de recevoir des symboles HALT (H) d'une autre station pour construire un nouveau segment du réseau.

L'évolution de chaque station diffère suivant qu'il s'agit du segment aval ou du segment amont qui est opérationnel le premier :

– si c'est le segment amont qui réagit en premier, la station n'a pas le pouvoir de procéder à la connexion ; elle suit la procédure contrôlée par la station amont ;

– si le segment aval s'active en premier, la station est en tête et prend l'initiative complète du processus de connexion.

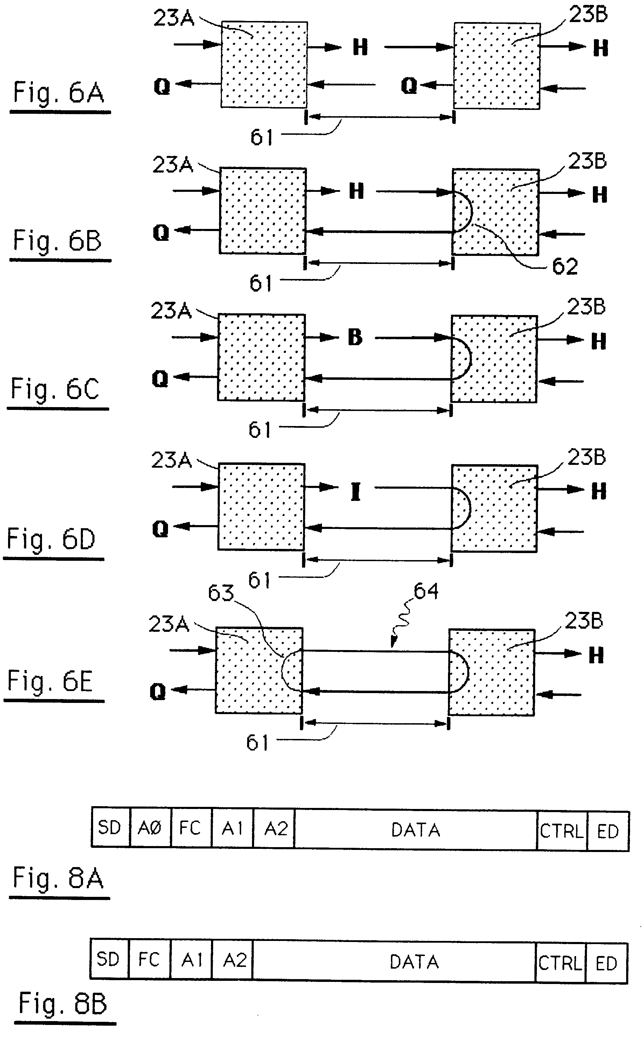

Les figures 6A à 6E illustrent ce mécanisme dans le cas d'école de deux stations 23A et 23B isolées. La station 23A va devenir la tête du segment 61 la reliant à la station aval. En suivant les ordres de connexion reçus, la station 23B va devenir la queue du segment 61 considéré.

Les étapes de la connexion de la station 23A sont donc les suivantes :

– étape 1 (fig.6A) : les stations 23A et 23B sont dans l'état inséré, mais la continuité du medium n'est pas encore réalisée. Chacune des stations 23A et 23B émet des symboles HALT (H) sur l'anneau d'écriture 21. L'absence de trafic en émission sur l'anneau de lecture est symbolisée par le caractère Q (QUIET (calme)).

– étape 2 (fig.6B) : la station 23B reçoit les symboles H émis par la station 23A. Elle ne peut les recopier sur l'anneau d'écriture 21 vers une autre station. Elle passe donc dans l'état de station de queue, et retransmet (62) les symboles H à la station 23A.

– étape 3 (fig.6C) : par la réception de symboles H sur l'anneau de lecture 22, la station 23A s'assure de l'intégrité physique de son segment aval 61. Elle prend ensuite l'initiative de construire son réseau aval, en envoyant des messages de localisation (BEACON (B)) contenant son adresse physique pour demander à sa station avale 23B de relier leur segment commun 61 au reste du réseau, le cas échéant.

– étape 4 (fig.6D) : quand la station 23A commence à recevoir ses messages de localisation B sur son anneau de lecture 22, elle sait qu'elle est bien devenue la station de tête du réseau situé à son aval. Elle le purge de tous ses messages de localisation (BEACON) en émettant des symboles de bourrage (en anglais IDLE (I)).

– étape 5 (fig.6E) : La station 23A passe dans l'état de station de tête en rebouclant (63) l'anneau de lecture 22 sur l'anneau d'écriture 21, créant ainsi un sous-réseau 64.

Lorsque la station de tête d'un tel sous-réseau n'est pas initialement dans l'état de station insérée, mais dans l'état de station de queue d'un autre sous-réseau, le procédé de connexion comprend une étape supplémentaire.

En effet, pour relier les deux sous-réseaux ensemble, la station commune à ces deux sous-réseaux attend de recevoir le droit d'accès de sa station amont. Dès qu'elle le reçoit, elle passe dans l'état répétition et transmet le droit d'accès à sa station avale.

Enfin, lorsqu'une station de queue reçoit sur l'anneau de lecture des messages de localisation qu'elle a émis, elle sait que le réseau est rebouclé. Elle passe alors dans l'état de station de rebouclage. Le réseau à anneaux ouverts est ainsi prêt à fonctionner tel que cela a été précédemment décrit.

Une caractéristique essentielle des réseaux à doubles anneaux, et des réseaux à anneaux ouverts en particulier, est la robustesse. Ils offrent en effet la possibilité de reconfigurer le réseau en cas de panne, de façon à assurer la continuité du réseau, malgré une coupure d'un des media.

Pour cela, les stations entourant la coupure détectée passent, l'une dans l'état de station de tête, et l'autre dans l'état de station de queue. Dans le même temps, la station de rebouclage passe dans l'état de station de répétition. On est alors dans une configuration identique à celles des sous-réseaux en cours de constitution du réseau.

Les figures 7A et 7B illustrent ce procédé de reconfiguration.

En figure 7A, le réseau est en mode de fonctionnement normal. Les stations 23B à 23E sont dans l'état de station de répétition, assurant la continuité des anneaux d'écriture 21 et de lecture 22, la station 23A assurant le rebouclage.

Une coupure 71 se produit sur l'anneau d'écriture 21, entre les stations 23C et 23D. La station 23D en aval de la coupure 71 détecte celle-ci par arrêt de l'activité sur le récepteur opto-électronique correspondant. Elle prend alors l'initiative de reconstruire le réseau et envoie des messages de localisation (BEACON (B)) sur l'anneau d'écriture 21. En passant de station en station, ces messages provoquent la mise en mode répétition de toutes les stations et en particulier de celle (23A) qui assurait le rebouclage du réseau avant la panne.

Conjointement à cette action, la nouvelle station de tête 23D arrête la transmission de données sur l'anneau de lecture 22 afin de prévenir sa station amont 23C de la coupure 71. Celle-ci passe alors en mode queue de réseau afin d'assurer correctement le rebouclage des données.

Quand la station en tête 23D du réseau reçoit ses propres messages de localisation, elle sait que la continuité du medium est à nouveau rétablie. Elle purge le réseau par l'envoi de symboles de bourrage (IDLE) puis passe dans l'état de station de tête pour reboucler le droit d'accès de l'anneau de lecture 22 sur l'anneau d'écriture 21.

Par ce mécanisme de base, que l'on retrouvera dans les autres cas de panne, le réseau à anneaux ouverts est transformé en un réseau à un seul anneau replié sur lui-même (anneau dit en banane). La figure 7B illustre l'état du réseau reconfiguré, la station 23A étant dans l'état de station de répétition, la station 23C dans l'état de station de queue, et la station 23D dans l'état de station de tête. Le droit d'accès n'est plus recopié par la station de rebouclage mais par la station de tête 23D. Ainsi, on assure encore totalement le fonctionnement du réseau. Toutefois, le droit d'accès circule un peu plus lentement (parcours de retour sur l'anneau de lecture pendant lequel le droit d'accès est inactif) que dans le cas précédent (circulation uniquement sur l'anneau d'écriture).

Lorsqu'il se produit une coupure sur l'anneau de lecture, la station amont qui détecte la coupure, par arrêt de l'activité sur l'anneau de lecture, passe en mode de station de queue de réseau et prévient sa station avale, par des symboles de type HALT, de passer en mode tête de réseau. La suite du processus de reconfiguration est identique au cas précédent.

Dans le cas d'une coupure conjointe des deux liaisons d'un même segment, c'est-à-dire lorsque le câble reliant la station est coupé, on vérifie que les deux processus de reprise, précédemment décrits, se mettent en route en même temps et conduisent sans rivalité à la remise en état du medium.

Que le segment soit coupé sur une seule ou sur ses deux liaisons, le processus de reprise ne peut avoir lieu que lorsque les deux liaisons sont opérationnelles. C'est alors seulement que la station de queue du réseau à un seul anneau replié sur lui-même reçoit de nouveau des symboles HALT. Elle entame alors le processus de prise de pouvoir qui aboutira à la faire passer dans l'état de station rebouclé, de façon similaire au processus de connexion précédemment décrit.

Lors de la description des procédés de mise en route d'un réseau à anneaux ouverts et de reconfiguration en cas de panne on n'a pas, par soucis de clarté, fait apparaître aucune notion de temporisation. Mais il est bien évident que tous ces procédés sont limités dans le temps pour éviter tout blocage définitif des stations. S'ils n'aboutissent pas en temps voulu, ils sont abandonnés par la station qui les a engendrés et celle-ci retourne dans l'état stable précédent.

On a montré la robustesse de la topologie à anneaux ouverts face une coupure d'une liaison entre deux stations. Cette robustesse est assurée par un mécanisme de reconfiguration des stations, basé sur l'évolution de l'état des connexions des stations, qui aboutit à l'isolement de la panne hors du réseau. on peut également vérifier que le procédé de reconfiguration fonctionne pour isoler une station particulière qui serait hors service.

Malgré sa forme assez particulière, l'agencement des liaisons entre stations proposé par l'invention peut être utilisé par des protocoles d'accès classiques des anneaux, et notamment les protocoles à jeton à réservation de priorité, à jeton temporisé et à compartiments.

Ces trois protocoles exploitent directement la répartition des stations en anneau pour rendre l'accès équitable. Cependant, il ne sera pas possible d'assurer un acquittement immédiat en fin de trame comme sur un anneau habituel, vu que les messages ne repassent pas nécessairement par la station qui les a émis.

Pour un protocole d'accès à jeton et réservation de priorité, l'utilisation d'une topologie à anneaux ouverts est peu contraignante, si ce n'est l'absence d'acquittement en fin de trame.

Pour assurer la continuité de l'anneau logique, la station de rebouclage recopie le jeton sur l'anneau d'écriture. Pour préserver le mécanisme de réservation de priorité, elle recopie aussi les en-têtes de messages. Quand l'anneau n'est pas complet, la station de tête recopie le jeton et les en-têtes de réservation à partir de l'anneau de lecture et non plus à partir de l'anneau d'écriture.

Pour tout ce qui concerne la vie végétative de l'anneau, il n'est pas nécessaire de prévoir une procédure de recherche de station maître. Ce rôle peut être naturellement tenu par la station de rebouclage ou la station de tête, selon la configuration du réseau.

En ce qui concerne les protocoles d'accès à jeton temporisé, la station de rebouclage assure également la continuité du droit d'accès en recopiant le jeton sur l'anneau d'écriture. La modification la plus importante vient de la procédure de négociation du temps moyen de rotation du jeton que l'on nommera CLAIM (demande d'accès) par référence au réseau FDDI. Sur réception d'une trame CLAIM, chaque station doit normalement analyser au vol le temps de rotation qui y est demandé et le comparer avec sa propre exigence. En fonction du résultat de cette comparaison, elle doit soit recopier tout ce qu'elle reçoit, soit se mettre à émettre ses propres trames CLAIM.

Il n'est pas possible de calquer directement cette procédure sur un réseau à topologie à anneaux ouverts selon l'invention. En effet, sur l'anneau d'écriture, les stations ne peuvent qu'émettre des informations et gérer le droit d'accès. Sur l'anneau de lecture, elles ne peuvent que recevoir un flux binaire. Il faut donc décomposer la procédure de négociation du temps de rotation du jeton en plusieurs étapes tenant compte de la propagation des trames CLAIM sur l'anneau de lecture:

– 1er temps : une station quelconque du réseau demande la négociation du temps de rotation du jeton par l'envoi, sur l'anneau d'écriture, d'une trame de gestion adéquate vers la station de tête ;

– 2ème temps : la demande de négociation passe sur l'anneau de lecture. En arrivant à la station de tête, cette trame de gestion est reconnue et déclenche le processus d'interrogation des stations : la station de tête envoie sa propre trame CLAIM sur l'anneau d'écriture ;

– 3ème temps : en passant de station en station, cette trame CLAIM est reconnue et déclenche l'envoi par chaque station de sa propre trame CLAIM. Il se forme ainsi sur le réseau une suite de trames CLAIM, dont chacune contient la revendication de sa station ;

– 4ème temps : en passant sur l'anneau de lecture, la suite des trames CLAIM est reçue par toutes les stations. Chacune peut alors déterminer dans le lot la plus forte exigence pour le temps de rotation ;

– 5ème temps : la station de tête reçoit sa trame CLAIM. La suite des trames à donc fait un tour complet et a été reçue par toutes les stations. La station de tête repère comme les autres la plus contraignante demande, puis libère un nouveau jeton pour relancer le réseau.

En supposant que la demande de négociation puisse venir d'une station quelconque parmi toutes les N stations réparties équitablement sur le réseau, le processus de négociation du temps de rotation du jeton aura pris au total :

– 1er temps : 1/2 tour d'anneau d'écriture en moyenne ;

– 2ème temps : 1 tour complet sur l'anneau de lecture ;

– 3ème temps : 1 tour complet sur l'anneau d'écriture ;

– 4ème temps : 1 tour complet sur l'anneau de lecture ;

– 5ème temps : N fois la durée d'émission d'une trame CLAIM.

Pour ce protocole, il faut remarquer que la topologie à anneaux ouverts simplifie la réalisation des stations, qui n'ont pas à se préoccuper de l'extraction des messages émis.

Les anneaux à compartiments (ou slots, en terminologie anglo-saxonne) présentent une configuration physique particulière sur laquelle on rajoute un mécanisme d'accès aléatoire réparti. Dans la topologie à anneaux ouverts la station de tête (ou la station de rebouclage) est là naturellement pour fabriquer la suite des compartiments vides sur l'anneau d'écriture. Toutes les stations accèdent normalement à ces compartiments par l'exploitation d'un drapeau de contrôle (compartiment vide ou plein).

Pour éviter une inégalité d'accès entre les stations proches de la tête et celle proche de la queue du réseau, il faut que des compartiments vides soient fabriqués sur tout le réseau et pas uniquement par la station de tête. En effet, la station de rebouclage n'émettant que des compartiments vides, les stations situées immédiatement à son aval ne voient qu'une très faible proportion de compartiments occupés. A l'inverse, les stations situées en fin de bus d'écriture voient une forte charge, ce qui réduit d'autant leur chance d'accès. Cette situation n'est pas acceptable car on demande toujours au protocole d'accès de ne pas introduire de disparité entre les stations quand la charge est répartie équitablement. Une solution consiste à faire libérer les compartiments par la station source. Pour cela, la station de rebouclage recopie intégralement, sur les compartiments qu'elle fabrique, les en-têtes des compartiments qu'elle reçoit sur l'anneau d'écriture. Les compartiments occupés ainsi émis ne contiennent plus d'information et peuvent être libérés par leur station source. On assure ainsi l'équité de l'accès.

De façon à assurer l'équité géographique d'accès, il est avantageux d'utiliser des compartiments pouvant prendre trois états distincts : vide, plein ou bloqué. Il s'agit ici d'une adaptation d'un protocole connu sous le nom CFRV décrit par M. ZAFIROVIC-VUKOTIC et I.G.M.M. NIEMEGEERS dans l'article déjà cité précédemment.

Cette adaptation aux réseaux à anneaux ouverts s'effectue de la façon suivante. A l'arrivée dans la station de rebouclage, un compartiment plein est renvoyé directement sur le bus de lecture. En même temps, la station de rebouclage enregistre l'adresse de la station source, indiquée dans le compartiment. Le prochain compartiment fabriqué par la station de rebouclage sur le bus d'écriture aval sera alors du type bloqué : le champ de signalisation contient l'adresse de la station source précédemment enregistrée, le champ de données étant laissé vide. C'est ce compartiment bloqué, réplique du compartiment plein émis, qui sera libéré par la source.

Par ce mécanisme, le bus d'écriture voit, pour chaque segment émis, une utilisation totale d'un tour : une partie sous la forme d'un compartiment plein, l'autre partie sous la forme d'un compartiment bloqué. L'équité géographique est ainsi assurée.

Pour exploiter au mieux un réseau selon l'invention, il faut que le temps de traversée des stations sur le bus d'écriture soit aussi court que possible. En particulier, il faut que le retard de décision introduit par la gestion des champs de signalisation soit aussi réduit que possible. Cette contrainte conduit à faire précéder le champ de contrôle FR (Frame Control en terminologie anglo-saxonne) d'un compartiment par un champ d'adresse A0.

Lorsqu'un compartiment bloqué est émis par la station de rebouclage, son champ d'adresse A0 contient l'adresse de la station source qui devra le libérer. Un retard de décision réduit à la longueur du champ FC suffit alors à changer l'état du compartiment.

Le reste du compartiment peut alors avoir la structure type que l'on retrouve dans les réseaux locaux.

La figure 8A décrit un tel compartiment. Il comprend huit plages contiguës. Dans l'ordre d'émission, on trouve :

SD (Start Delimitor) : suite unique de symboles délimitant le début du compartiment,

A0 (Adresse 0) : plage d'adresse, contenant l'adresse de la station devant libérer le compartiment lorsque celui-ci est dans l'état bloqué,

FC (Frame Control) : plage de quelques bits utilisée pour décrire la nature du compartiment, la priorité réservée,...

A1 (Adresse 1) : plage d'adresse, essentiellement utilisée comme zone d'adresse de destination,

A2 (Adresse 2) : plage d'adresse, essentiellement utilisée comme zone d'adresse de source,

DATA : plage de données, de 250 bits de longueur environ par exemple,

CTRL (Control) : plage de contrôle assurant le calcul de l'intégrité des données reçues,

ED (End Delimitor) : suite unique de symboles délimitant la fin du compartiment.

La disposition retenue pour les champs A0, FC, A1 et A2 permet à une station de modifier au vol l'état du compartiment qu'elle voit passer, en ne retenant dans ses registres internes qu'une longueur équivalente au champ FC.

Pour garantir l'équité géographique de l'accès aléatoire, on a vu qu'il était nécessaire de faire terminer la rotation complète de chaque compartiment plein par sa réplique bloquée. Cette réplique, émise par la station de rebouclage, est ensuite libérée par la station source correspondante. Cette méthode permet d'assurer une rotation d'un tour complet à chaque compartiment utilisé, mais au détriment de la charge offerte (augmentation de l'en-tête des compartiments par le champ A0).

Pour remédier à cela, il est avantageux d'autoriser les stations source à libérer un compartiment bloqué quelconque : une station source, qui a utilisé P compartiments, doit libérer par la suite P compartiments bloqués quelconques. L'appartenance d'un compartiment bloqué à une station d'émission n'existe plus. Sa libération intervient à la première station rencontrée qui possède un compteur non nul de compartiments bloqués à libérer.

Par ce mécanisme, la libération des compartiments bloqués ne se fait plus "compartiment par compartiment", mais de façon banalisée entre les stations. A chaque compartiment libéré par une station correspond un compartiment plein émis auparavant par cette station, mais sans qu'il y ait une exacte correspondance entre le compartiment plein et le compartiment ainsi libéré.

Ce mécanisme de libération maintient l'équité géographique de l'accès sans alourdir l'en-tête des compartiments. Chaque station doit simplement tenir à jour un compteur de libération : il est incrémenté à chaque envoi d'un segment dans un compartiment et décrémenté à chaque libération d'un compartiment bloqué. Même avec un compteur strictement positif, une station peut continuer à émettre des segments. Pour qualifier cette adaptation de l'accès aléatoire compartimenté CFRV, on parlera de libération banalisée.

La libération banalisée ne change pas les temps moyens d'accès des stations. Les charges en compartiments pleins (en amont de la station de rebouclage) et en compartiments bloqués (en aval de la station de rebouclage) se correspondent rigoureusement, et masquent ainsi la présence de la station de rebouclage. Ceci est vrai aussi bien pour une charge globale équitablement répartie que pour une charge dissymétrique.

Si une station est arrêtée inopinément ou si son compteur est décrémenté par erreur, les compartiments bloqués qui auraient dû être libérés continuent leur chemin sur le réseau. C'est alors la station de rebouclage qui les élimine (ré-émission de compartiments vides), car en régime normal aucun compartiment bloqué n'arrive sur son bus d'écriture en amont.

De plus, chaque station peut assurer la surveillance de son compteur, en remarquant notamment qu'il est toujours inférieur ou égal au nombre S de compartiments circulant en même temps sur le réseau.

La libération banalisée des compartiments bloqués ne nécessite pas l'exploitation des champs d'adresse des compartiments. Le champ A0, indispensable à l'adaptation du protocole CFRV au réseau de l'invention telle que précédemment décrit, est ici inutile. En effet, la gestion des compartiments est limitée au champ de contrôle FC, ce qui réduit le retard de décision des stations à la longueur de FC. La figure 8B présente un tel compartiment. Les sept plages SD, FC, A1, A2, DATA, CTRL et ED ont des rôles identiques à ceux décrits en liaison avec la figure 8A.

Ce protocole d'accès à compartiments pouvant prendre trois états distincts et à libération banalisée peut par ailleurs être adapté à de nombreux autres types de réseaux informatiques.

## Revendications

1. Réseau informatique, permettant l'interconnexion d'au moins deux stations informatiques (23A à 23F), notamment pour l'établissement de communications à très haut débit entre lesdites stations (23A à 23F),
caractérisé en ce qu'il comprend deux media (21,22) de transmission parallèles et distincts rebouclés chacun en anneau, sur chacun desquels chacune desdites stations (23A à 23F) est insérée en coupure, un premier desdits media (21) de transmission formant un anneau d'écriture, sur lequel lesdites stations (23A à 23F) émettent leurs messages, et un second desdits media (22) formant un anneau de lecture, sur lequel lesdites stations (23A à 23F) lisent les messages qui leur sont destinés, en ce que lesdits anneaux de lecture (22) et d'écriture (21) ont des sens de circulation des informations contra-rotatifs,
et en ce qu'il comprend des moyens de reconfiguration dudit réseau en un réseau à un seul anneau replié sur lui-même, lorsqu'une coupure (71) d'au moins un desdits media (21, 22) et /ou un disfonctionnement d'une desdites stations (23A à 23F) est détecté.

2. Réseau selon la revendication 1, caractérisé en ce que ledit premier medium (21) formant anneau d'écriture est également porteur des informations correspondant au droit d'accès audit réseau.

3. Réseau selon l'une quelconque des revendications 1 et 2, caractérisé en ce qu'il comprend une station de rebouclage (23A), effectuant la retransmission complète (27) desdits messages dudit anneau d'écriture (21) sur ledit anneau de lecture (22), et au moins une station de répétition (23B à 23F), assurant la continuité desdits anneaux (21 et 22), par recopie systématique en sortie de station des informations reçues en entrée de station sur chacun desdits anneaux.

4. Réseau selon les revendications 2 et 3, caractérisé en ce que ladite station de rebouclage (23A) assure la continuité dudit droit d'accès sur ledit anneau d'écriture (21), en recopiant (28) en sortie de station les informations correspondant audit droit d'accès reçues en entrée de station.

5. Réseau selon l'une quelconque des revendications 3 ou 4, caractérisé en ce que ladite station de rebouclage (23A) assure l'élimination systématique des informations qu'elle reçoit sur l'anneau de lecture (22).

6. Station informatique insérable dans le réseau de l'une quelconque des revendications 1 à 5, caractérisée en ce qu'elle comprend :

   – un couple émetteur-récepteur (31,32) pour ledit anneau d'écriture (21);

   – un couple émetteur-récepteur (33,34) pour ledit anneau de lecture (22);

   – une entité (35) de vie végétative, assurant la permanence du protocole d'accès audit réseau ;

   – une entité (36) de gestion des connexions ;

   – une entité (37) de gestion de l'émission et de la réception des messages de données.

7. Station selon la revendication 6, caractérisée en ce que lesdits couples émetteur-récepteur comprennent des moyens de récupération de rythme et un registre tampon élastique de plésiochronisme.

8. Station selon l'une quelconque des revendications 6 ou 7, caractérisée en ce qu'elle peut prendre au moins les six états stables suivants :

   – station contournée (fig.4A de la demande de brevet telle que déposée), complètement isolée dudit réseau, dont la continuité reste assurée ;

   – station insérée (fig.4B de la demande de brevet telle que déposée), les émetteurs et récepteurs de ladite station (23) étant connectés audit réseau, mais ne recevant aucune information cohérente ;

   – station de queue (fig.4C de la demande de brevet telle que déposée), recevant des informations cohérentes uniquement sur ledit anneau d'écriture (21);

   – station de tête (fig.4D de la demande de brevet telle que déposée), recevant des informations cohérentes uniquement sur ledit anneau de lecture (22), et recopiant (42) lesdites informations cohérentes sur ledit anneau d'écriture (21);

   – station de répétition (fig.4E de la demande de brevet telle que déposée), recevant des informations cohérentes sur les deux anneaux (21 et 22), et assurant la transition systématique desdites informations ;

   – station de rebouclage (fig.4F de la demande de brevet telle que déposée), recopiant (28) les informations de droit d'accès sur ledit anneau d'écriture (21), et (27) les informations de données sur ledit anneau de lecture (22).

9. Procédé de connexion d'une station informatique (23) selon la revendication 8, à un réseau selon l'une quelconque des revendications 1 à 5, caractérisé en ce qu'il comprend les étapes suivantes :

   – réalisation de tests internes à ladite station (23), dans ledit état de station contournée ;

   – passage dudit état de station contournée audit état de station insérée, et émission d'un message de test sur ledit anneau d'écriture (21) ;

   – si ladite station (23) est dans l'état de station insérée et reçoit un message de test sur ledit anneau d'écriture (21), passage à l'état de station de queue ;

   – si ladite station (23) est dans l'état de station insérée et reçoit un message de test sur ledit anneau de lecture (22), passage à l'état de station de tête;

   – si ladite station (23) est dans l'état de station de queue et reçoit un message de test sur ledit anneau de lecture (22), passage à l'état de station de répétition ;

   – si ladite station (23) est dans l'état de station de tête et reçoit un message de test sur ledit anneau d'écriture (21), passage à l'état de station de répétition ;

   – si ladite station (23) est dans l'état de station de queue et reçoit sur ledit anneau d'écriture (21) un message de test qu'elle a émis, passage à l'état de station de rebouclage.

10. Procédé de reconfiguration en cas de panne d'un réseau selon l'une quelconque des revendications 1 à 5, équipé de stations informatiques selon la revendication 8, caractérisé en ce que, lorsqu'une coupure (71) d'un desdits anneaux de lecture (22) ou d'écriture (21) est détectée, ledit réseau est transformé en un réseau à un seul anneau replié sur lui-même, comprenant une station de tête (23D) et une station de queue (23C), les autres stations (23A,23B,23E) étant des stations de répétition.

11. Procédé selon la revendication 10, caractérisé en ce que, lorsque l'une desdites stations (23D) détecte une coupure (71) dudit anneau d'écriture (21), par l'arrêt de l'activité sur son récepteur pour l'anneau d'écriture (21), ladite station (23D) effectue les opérations suivantes :

   – passage dans l'état de station de tête ;

   – arrêt de la transmission de données sur ledit anneau de lecture (22), entraînant le passage dans l'état de station de queue de la station (23C) en amont de ladite station (23D) sur l'anneau d'écriture (21) ;

   – émission de messages entraînant le passage de l'ensemble des autres stations (23A,23B,23E) dans l'état de station de répétition.

12. Procédé selon l'une quelconque des revendications 10 ou 11, caractérisé en ce que, lorsque l'une desdites stations (23A à 23E) détecte une coupure dudit anneau de lecture (22), par l'arrêt de l'activité sur son récepteur pour l'anneau de lecture (22), ladite station effectue les opérations suivantes :

— passage dans l'état de station de queue ;
— émission d'un message vers la station en aval de ladite station sur l'anneau d'écriture (21) ;
ladite station en aval effectuant, à réception dudit message, les opérations suivantes:
— passage dans l'état de station de tête ;
— émission de messages entraînant le passage de l'ensemble des autres stations dans l'état de station de répétition.

13. Procédé selon l'une quelconque des revendications 10 à 12, caractérisé en ce que, lorsque ledit réseau est configuré en réseau à un seul anneau replié sur lui-même et que la station de queue (23C) dudit réseau reçoit un message de test sur son récepteur pour l'anneau de lecture, ladite station (23C) passe d'abord dans l'état de station de répétition, puis dans l'état de station de rebouclage lorsqu'elle reçoit sur ledit anneau d'écriture (21) un message qu'elle a émis.

14. Protocole d'accès à un réseau selon l'une quelconque des revendications 1 à 5, caractérisé en ce qu'il utilise un jeton à réservation de priorité, ledit jeton et les en-têtes de chaque message reçus par chacune desdites stations (23A à 23F) étant systématiquement recopiés sur ledit anneau d'écriture (21).

15. Protocole d'accès à un réseau selon l'une quelconque des revendications 3 à 5, caractérisé en ce qu'il utilise un jeton temporisé, la négociation du temps de rotation dudit jeton comprenant les étapes suivantes :

— émission par l'une desdites stations (23B à 23F) vers ladite station de rebouclage (23A) d'un premier message demandant la négociation du temps de rotation dudit jeton ;
— à réception dudit premier message pas ladite station de rebouclage (23A), émission par ladite station de rebouclage (23A) d'un second message vers l'ensemble des autres stations (23B à 23F) ;
— à réception dudit second message, émission par chacune desdites autres stations d'un message précisant leur besoin pour ledit temps de rotation ;
— détermination par chacune desdites stations de la station ayant la plus forte exigence pour ledit temps de rotation, par scrutation de l'ensemble des messages circulant sur ledit anneau de lecture (22) ;
— à réception par ladite station de rebouclage (23A) dudit second message émis par elle-même, détermination par ladite station de rebouclage (23A) de la station ayant la plus forte exigence pour ledit temps de rotation, puis libération d'un nouveau jeton pour remettre en route ledit réseau.

16. Protocole d'accès à un réseau selon l'une quelconque des revendications 1 à 5, caractérisé en ce qu'il utilise des compartiments, chacun desdits compartiments comprenant un drapeau de contrôle précisant au moins son état libre ou plein, chacune desdites stations (23A à 23F) pouvant émettre un message dans l'un desdits compartiments lorsque ledit drapeau indique l'état libre, ladite station commutant alors ledit drapeau dans l'état plein, puis commutant à nouveau ledit drapeau dans l'état libre à réception de l'en-tête dudit compartiment sur ledit anneau d'écriture (21), ledit en-tête ayant effectué un tour complet sur ledit anneau d'écriture (21).

17. Protocole d'accès selon la revendication 16, caractérisé en ce que lesdits compartiments (fig.8A de la demande de brevet telle que déposée) circulant sur ledit anneau d'écriture peuvent prendre les trois états suivants :

— état libre, disponible pour transmettre les données ;
— état plein, porteur de données ;
— état bloqué, non porteur de données mais non disponible ;
et en ce que l'utilisation de l'un desdits compartiments comprend les étapes suivantes :
— écriture de données à transmettre par une station émettrice dans ledit compartiment reçu dans l'état libre, et commutation de l'état dudit compartiment dans l'état plein ;
— recopie par ladite station de rebouclage dudit compartiment dans l'état plein dudit anneau d'écriture (21) sur ledit anneau de lecture (22), et émission d'un compartiment bloqué sur ledit anneau d'écriture (21) ;
— commutation de l'état d'un compartiment reçu dans l'état bloqué dans l'état libre par ladite station émettrice.

18. Adaptation du protocole d'accès à compartiments dans lequel chacun desdits compartiments (fig.8B de la demande de brevet telle que déposée) peut prendre les trois états suivants :

— état libre, disponible pour transmettre les données ;
— état plein, porteur de données ;
— état bloqué, non porteur de données mais non disponible ;
caractérisé en ce que chacune des stations (23A à 23F) ayant accès au réseau gère un compteur de libération de compartiments,
ledit compteur étant incrémenté à chaque émission par ladite station d'un compartiment dans l'état plein,
et ledit compteur étant décrémenté à chaque réception d'un compartiment dans l'état bloqué, tant que ledit compteur a une valeur strictement positive, ledit compartiment reçu dans l'état bloqué étant alors réémis dans l'état libre.

Fig. 1

Fig. 2

Fig. 3

Fig. 4A

Fig. 4B

Fig. 4C

Fig. 4D

Fig. 4E

Fig. 4F

Fig. 5

Fig. 7A

Fig. 7B

Fig. 6A

Fig. 6B

Fig. 6C

Fig. 6D

Fig. 6E

| SD | AØ | FC | A1 | A2 | DATA | CTRL | ED |
|----|----|----|----|----|------|------|-----|

Fig. 8A

| SD | FC | A1 | A2 | DATA | CTRL | ED |
|----|----|----|----|------|------|-----|

Fig. 8B

**EP 0 471 633 A1**

Office européen
des brevets

**RAPPORT DE RECHERCHE EUROPEENNE**

Numero de la demande

EP 91 46 0040

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | PATENT ABSTRACTS OF JAPAN, vol. 6, no. 37 (E-97)[915], 6 mars 1982; & JP-A-56 156 046 (NIPPON DENKI K.K.) 02-12-1981 * En entier * | 1 | H 04 L 12/42 |
| A | IDEM | 3-5,16-18 | |
| Y | GB-A-2 133 952 (I.S.E.C.) * Page 1, lignes 45-50; page 1, ligne 63 - page 2, ligne 5; page 2, lignes 16-44 * | 1 | |
| A | | 6-10 | |

**DOMAINES TECHNIQUES RECHERCHES (Int. Cl.5)**

H 04 L

Le présent rapport a été établi pour toutes les revendications

| Lieu de la recherche | Date d'achèvement de la recherche | Examinateur |
|---|---|---|
| LA HAYE | 06-11-1991 | DE LA FUENTE DEL AGUA P. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
    ...........................................................................
& : membre de la même famille, document correspondant

EPO FORM 1503 03.82 (P0402)

22